# EUROPÄISCHE PATENTANMELDUNG

(11) **EP 1 536 149 A2**
(43) Veröffentlichungstag der Anmeldung: **01.06.2005**
(21) Anmeldenummer: 04405714.9
(22) Anmeldetag: 17.11.2004
(51) Int. Cl.: F16B 13/00

(54) **Befestigungselement**

(30) Priorität: 28.11.2003 CH 20302003
(71) Anmelder: Pama Reiter Stefan, 9485 Nendeln (LI)
(72) Erfinder: Reiter, Stefan, 9485 Nendeln (LI)
(74) Vertreter: Schreiber, Wolfgang

(57) **Zusammenfassung**

Es ist ein Befestigungselement (1) für harte Untergründe, insbesondere für Beton oder dergleichen, vorgeschlagen, welches einen im wesentlichen zylindrischen Körper (2) aufweist, an dessen Umfangsfläche wenigstens eine wendelförmig umlaufende Schneide (7) vorgesehen ist. Die Schneide (7) erstreckt sich von einem setzrichtungsseitigen (S) vorderen Endabschnitt (3) des Körpers (2) in Richtung dessen rückwärtigen Endes (4). Ein Angriffsmittel (8) für ein Setzwerkzeug dient beim Setzvorgang zur Übertragung von Drehmoment. Das Angriffsmittel (8) ist im wesentlichen auf der gleichen axialen Höhe des Körpers (2) angeordnet wie ein Auslauf (71) der Schneide (7) am vorderen Endabschnitt (3) des Körpers (2).

## Beschreibung

Die Erfindung betrifft ein Befestigungselement für harte Untergründe, insbesondere für Beton, Stein, Mauerwerk oder dergleichen, gemäss dem Oberbegriff des Patentanspruchs 1.

Zur Befestigung von Bauteilen an harten Untergründen, wie beispielsweise Beton, Stein, Ziegelmauerwerk und dergleichen, werden meist Dübel als Befestigungselemente verwendet. Diese besitzen üblicherweise einen hülsenförmigen Dübelkörper aus Metall oder Stahl, der in einer im Untergrund vorbereiteten Bohrung verankert wird, und Lastangriffsmittel, die zur Festlegung des Bauteils mit dem eigentlichen Befestigungsmittel, beispielsweise einer Schraube, einem Bolzen oder dergleichen, zusammenwirken. Die Lastangriffsmittel sind meist Innengewinde, die in der Innenwandung des mit einer Bohrung versehenen, hülsenförmigen Dübelkörpers vorgesehen sind. Es können aber auch andere Arten von Lastangriffsmitteln, beispielsweise Bajonettanschlüsse oder weitere dergleichen formschlüssige Verbindungen, vorgesehen sein. Eine weitere Art von gebräuchlichen Lastangriffsmitteln sind beispielsweise auch steckbare Schnellverschlüsse mit federnd in die Strukturierung einer Gewindestange eingreifenden Verriegelungselementen und dergleichen. Die Verankerung der Dübel im Untergrund erfolgt meist durch ein radiales Aufweiten eines Spreizbereichs am in Setzrichtung vorderen Endabschnitt des Dübelkörpers. Dazu wird ein üblicherweise konisches Spreizelement unter radialem Aufspreizen des Spreizbereichs in einer Bohrung des hülsenförmigen Dübelkörpers verschoben. Der Spreizkonus ist dabei meist bereits innerhalb der Bohrung angeordnet und wird schlagend in der Bohrung vorgetrieben. Bei sogenannten Aussenkonusdübeln ist der Spreizkörper am vorderen Ende des Dübelkörpers festgeklemmt. Zum Verankern derartiger Befestigungselemente im Untergrund wird der meist metallische, hülsenförmige Dübelkörper über den sich am Bohrlochgrund abstützenden Spreizkörper aus Metall getrieben. Dabei wird der Spreizbereich radial aufgeweitet.

Die Relativverschiebung zwischen dem hülsenförmigen Dübelkörper und dem konischen Spreizkörper erfolgt durch axiale Schläge, mit denen der Spreizkonus in der Bohrung vorgetrieben bzw. der Dübelkörper auf den Spreizkörper aufgetrieben wird. Durch den schlagenden Setzvorgang sind die beschriebenen Befestigungselemente nicht für jeden Untergrund geeignet. In Ziegelmauerwerk, beispielsweise, kommt es durch die Wucht der axialen Schläge oft zu Beschädigungen des Ziegels. Danach ist keine sichere Verankerung mehr möglich. Aber auch in porösem Sandstein oder dergleichen Untergründen kann es durch die axialen Schläge auf den Spreizkörper bzw. auf den hülsenförmigen Dübelkörper zu Beschädigungen kommen, die dazu führen, dass die geforderten Lastwerte nicht erreicht werden. Die kraftschlüssige Verankerung dieser Dübelgattung im Untergrund durch radiales Aufspreizen des Spreizbereichs des Dübelkörpers ist in vielen Anwendungsfällen nachteilig. Infolge der relativ hohen Spreizkräfte müssen vorgegebene Mindestrand- und Mindestachsabstände eingehalten werden, um die Sicherheit des Befestigungspunktes gewährleisten zu können. Dies schränkt die Möglichkeiten zur Befestigung von Bauteilen oft in unerwünschter Weise ein.

Für die Erstellung von Befestigungen mit geringeren Achs- und Randabständen ist bei einer zweiten Gattung von Befestigungselementen eine weitgehend spreizdruckfreie, formschlüssige Verankerung vorgesehen. Bei sogenannten Hinterschnittdübeln besteht die formschlüssige Verankerung darin, dass am Dübelkörper vorgesehene Spreizlappen in eine, meist in der Nähe des Bohrlochgrunds angebrachte Hinterschneidung ausgestellt werden. Die Hinterschneidung im Untergrund muss zuvor gesondert, mit Hilfe von speziellen Hinterschnittgeräten im Bohrloch erstellt werden. Diese Art der Befestigungstechnik ist sehr zeit- und kostenaufwendig. Sie wird daher üblicherweise nur bei besonders sicherheitsrelevanten Befestigungen und insbesondere für Schwerstlastbefestigungen angewandt.

Aus dem Stand der Technik sind auch formschlüssig verankernde Befestigungselemente bekannt, die ohne die gesonderte Erstellung einer Hinterschneidung in einer Bohrung im Untergrund verankert werden. Derartige Befestigungselemente sind beispielsweise in der EP-A-1 174 626 beschrieben. Sie weisen einen im wesentlichen zylindrischen Dübelkörper auf, der mit einer axialen Bohrung versehen ist. Ein Innengewinde in der Bohrungswandung dient als Lastangriffsmittel. Bei einer ersten Ausführungsvariante der beschriebenen Befestigungselemente ist an der Aussenseite des Dübelkörpers eine wendelförmig umlaufende Schneide vorgesehen. Am setzrichtungsseitig abgewandten Ende weist der Dübelkörper ein innenliegendes Angriffsmittel für Setzwerkzeuge auf. Ein zweites beschriebenes Befestigungselement weist einen zweiteiligen Dübelkörper mit unterscheidlichen Durchmessern auf. An einen zylindrischen Schaft schliesst entgegen der Setzrichtung ein im wesentlichen zylindrischer Anschlussteil an. Die Aussenseite des zylindrischen Schafts ist mit wenigstens einer wendelförmig umlaufenden Schneide versehen. Der zylindrische Anschlussteil weist eine Sacklochbohrung auf, die mit einem Innengewinde versehen ist. Am Grund der Sacklochbohrung des Anschlussteils ist ein Angriffsmittel für Setzwerkzeuge vorgesehen. Die beschriebenen Befestigungselemente werden drehend in eine vorbereitete Aufnahmebohrung eingeschraubt. Dabei gräbt sich die am Dübelkörper oder am zylindrischen Schaft vorgesehene Schneide in die Bohrlochwandung und erzeugt eine im wesentlichen formschlüssige Verankerung. Die eigentliche Festlegung eines Bauteils erfolgt über eine Schraube oder dergleichen, die in die Sacklochbohrung des Dübelkörpers bzw. des Anschlussteils eingeschraubt wird.

Weiters sind aus dem Stand der Technik auch sogenannte Betonschrauben bekannt. Diese weisen einen zylindrischen Schaft auf, dessen Aussenseite mit wenigstens einer wendelförmigen Schneide versehen ist. Am setzrichtungsseitig abgewandten Ende weist der Schaft einen üblicherweise als Sechskant ausgebildeten Kopf auf. Der Kopf dient als Angriffsmittel zur Drehmomentübertragung beim Einschrauben der Betonschraube in einer vorbereitete Aufnahmebohrung und gleichzeitig zur Festlegung eines Bauteils. Beim Einschrauben gräbt sich die Schneide in die Wandung der Aufnahmebohrung und erzeugt so eine im wesentlichen formschlüssige Verankerung.

Nachteilig an diesen aus dem Stand der Technik bekannten, selbstschneidenden Befestigungselementen bzw. Betonschrauben ist, dass sie beim Setzvorgang eine grosse Tendenz zu kippen aufweisen und beim Setzvorgang wie ein Kreisel mehr oder weniger regelmässig um ihre Achse präzesieren. Dadurch ist der Setzvorgang deutlich erschwert. Durch das Kippen des Befestigungselements bzw. der Betonschraube wird beim Setzvorgang die Aufnahmebohrung an ihrer Mündung und über eine nicht unbeträchtliche Länge ihrer axialen Erstreckung radial aufgeweitet. Dies kann dazu führen, dass das Befestigungselement in seinem setzrichtungsseitig rückwärtigen Abschnitt nicht mehr in der Wandung der Aufnahmebohrung verankert ist und die geforderten Haltewerte nicht mehr erreicht werden.

Um der Kipptendenz beim Setzvorgang entgegenzuwirken, sind bei einem weiteren aus dem Stand der Technik bekannten Befestigungselement an der Aussenseite des Dübelkörpers drei wendelförmig umlaufende Schneiden vorgesehen, die an der Dübelspitze an einem Umfangskreis auslaufen. Dadurch weist das Befestigungselement beim Ansetzen an die Aufnahmebohrung eine Dreipunkt-Auflage auf. Beim Setzvorgang graben sich die drei Schneiden gleichzeitig und gleichmässig in die Wandung der Aufnahmebohrung ein. Ein Kippen des Befestigungselements kann dadurch weitgehend vermieden werden. Die Herstellung des Befestigungselements mit drei wendelförmig umlaufenden Schneiden ist jedoch relativ aufwändig und verteuert das Produkt.

Es ist daher Aufgabe der vorliegenden Erfindung, diesen Nachteilen der Befestigungselemente des Stands der Technik abzuhelfen. Es soll ein Befestigungselement geschaffen werden, welches Befestigungen mit kleinen Achs- und Randabständen ermöglicht. Die Tendenz des Befestigungselements, beim Setzvorgang zu kippen und um seine Achse zu präzesieren, soll weitgehend beseitigt sein. Dabei soll das Befestigungselement einfach und kostengünstig herstellbar sein.

Die Lösung dieser Aufgaben besteht in einem Befestigungselement, welches die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Patentansprüche.

Die Erfindung schlägt ein Befestigungselement für harte Untergründe, insbesondere für Beton oder dergleichen, vor, welches einen im wesentlichen zylindrischen Körper aufweist, an dessen Umfangsfläche wenigstens eine wendelförmig umlaufende Schneide vorgesehen ist. Die Schneide erstreckt sich von einem setzrichtungsseitigen vorderen Endabschnitt des Körpers in Richtung seines rückwärtigen Endes. Ein Angriffsmittel für ein Setzwerkzeug dient beim Setzvorgang zur Übertragung von Drehmoment. Das Angriffsmittel ist im wesentlichen auf der gleichen axialen Höhe des Körpers angeordnet wie ein Auslauf der Schneide am vorderen Endabschnitt des Körpers.

Indem des Angriffsmittel für ein Setzwerkzeug zur Drehmomentübertragung beim Setzvorgang im wesentlichen auf gleicher Höhe mit dem Auslauf der Schneide angeordnet ist, wird der Kipptendenz des Befestigungselements zuverlässig entgegengewirkt. Im Gegensatz zu den Befestigungselementen des Stands der Technik wird dadurch das Drehmoment in unmittelbarer Nachbarschaft des Eingriffs der Schneide in die Wandung einer vorbereiteten Aufnahmebohrung eingeleitet. Beim Setzvorgang weist das Befestigungselement daher eine sehr stabile Lage auf; eine Präzesion um seine Achse infolge Kippens aus der axialen Ausrichtung wird weitgehend vermieden. Dadurch kann auch bei einem Befestigungselement mit nur einer umlaufenden Schneide ein Aufweiten der Aufnahmebohrung im Mündungsbereich verhindert werden. Durch das Einleiten des Drehmoments in unmittelbarer Nachbarschaft zum Schneidenauslauf am vorderen Endabschnitt des Körpers des Befestigungselements greift die Schneide optimal in die Wandung der Aufnahmebohrung ein und stabilisiert so das Befestigungselement unmittelbar nach Beginn des Setzvorgangs zusätzlich. Auf Mehrfachschneiden, beispielsweise drei Schneiden zur Erzielung einer Dreipunktauflage, vor Beginn des Setzvorgangs kann verzichtet werden. Dadurch ist das Befestigungselement relativ einfach und kostengünstig herstellbar. Beispielsweise kann das Befestigungselement mit der einzelnen wendelförmig umlaufenden Schneide in einem Kaltumformprozess aus Stahl hergestellt werden. Für besondere Einsatzbedingungen kann das Befestigungselement auch aus einer rostfreien Stahllegierung oder dergleichen hergestellt sein.

Das Angriffsmittel zur Drehmomentübertragung weist zweckmässigerweise eine polygone Querschnittskontur auf. Vorzugsweise ist die Querschnittskontur regelmässig mehreckig, insbesondere drei-, vier-, fünf- oder sechseckig ausgebildet. Setzwerkzeuge mit derartigen Querschnittskonturen sind hinlänglich bekannt und in unterschiedlichen Durchmessern erhältlich. Das Lastangriffmittel kann jedoch auch andere Querschnittkonturen aufweisen. Prinzipiell sind alle aus der Schraubtechnik bekannten offenen Querschnittskonturen geeignet. Beispiele dafür sind einfache oder gekreuzte Schlitze, Torx-Konturen, sternförmige Konturen und dergleichen. Bei der Auswahl der Querschnittskontur wird neben der Verfügbarkeit von Setzwerkzeugen in der Regel auch eine möglichst grosse Gesamtfläche zur Drehmomentübertragung angestrebt, die in einen vorgegebenen Durchmesser einschreibbar ist.

Das Angriffsmittel ist mit Vorteil innerhalb des Körpers des Befestigungselements angeordnet und durch eine am rückwärtigen Ende des Körpers mündende Bohrung erreichbar. Diese Ausführungsvariante ist bei einer klassischen zylindrischen Betonschraube mit Sechskantkopf ebenso umsetzbar wie bei einer selbstschneidenden dübelartigen Ausführungsvariante des Befestigungselements.

Bei einer Ausführungsvariante des Befestigungselements als selbstschneidender Einschraubdübel weist die Bohrung im Körper des Befestigungselements einen Durchmesser auf, der grösser ist als ein Durchmesser des Angriffsmittels. Dadurch kann das Setzwerkzeug ungehindert durch die Mündung der Bohrung am rückwärtigen Ende des Körpers eingeführt und mit dem Angriffsmittel in Eingriff gebracht werden. Das Setzwerkzeug kann dabei beispielsweise sehr einfach nach der Art von bekannten Schraubwerkzeugen ausgebildet sein.

Die Bohrung im Körper ist mit einem Lastangriffsmittel ausgestattet, welche vorzugsweise entgegen der Setzrichtung nach rückwärts an das Angriffsmittel anschliesst. Das Lastangriffmittel kann ein Schnellanbindesystem auf klemmender Formschlussbasis, ein Bajonettanschluss oder dergleichen sein. In einer bevorzugten Ausführungsvariante des Befestigungselements ist das Lastangriffsmittel ein Innengewinde. Das Innengewinde kann dabei als ein Steilgewinde, ein Withworth-Gewinde, ein metrisches Gewinde oder dergleichen ausgebildet sein. Gewinde als Lastangriffsmittel bieten den Vorteil, dass ein am Befestigungsmittel festgelegtes Bauteil sehr einfach durch Lösen der eingeschraubten Befestigungsschraube wieder demontierbar ist.

Indem der vordere Endabschnitt des Körpers des Befestigungselements zum vorderen Ende hin verjüngt ausgebildet ist, wird das Ansetzen und Einschrauben des Befestigungselements in die vorbereitete Aufnahmebohrung im Untergrund erleichtert. Die verjüngte Ausbildung des voderen Endabschnitts umfasst dabei auch Anfasungen oder eine kalottenförmige oder ähnliche Ausbildung des Vorderendes des Körpers.

Die wendelförmig umlaufende Schneide erstreckt sich mit Vorteil über einen wesentlichen Teil der Längserstreckung des Körpers des Befestigungselements. Die Schneide gräbt sich beim drehenden Setzvorgang in die Wandung der vorbereiteten Aufnahmebohrung und erstellt eine formschlüssige Verankerung. Die Länge der formschlüssigen Verankerung in der Aufnahmebohrung ist ein Mass für die erzielbaren Lastwerte.

Wie bereits im Vorstehenden ausgeführt wurde, ist die erfindungsgemässe Ausbildung für selbstscheidende dübelförmige Ausführungsvarianten ebenso geeignet wie für die aus dem Stand der Technik hinlänglich bekannten sogenannten Betonschrauben, welche über ihren meist sechskantigen Kopf ein Bauteil festlegen. In einer Variante für Betonschrauben ist der Körper mit einer axialen Bohrung versehen, die am Kopf mündet. Das Angriffsmittel ist über diese Bohrung erreichbar. Die Bohrung weist dabei zweckmässigerweise im wesentlichen über ihre gesamte sich vom rückwärtigen Ende des Körpers zum Angriffsmittel erstreckende Länge einen Querschnitt auf, der demjenigen des Angriffsmittels entspricht. Das etwa auf der gleichen Höhe wie der Auslauf der Schneide angeordnete Angriffsmittel setzt sich in dieser Ausführungsvariante zum rückwärtigen Ende der Betonschraube fort. Die daraus resultierende Gesamtfläche zur Drehmomentübertragung ist bei dieser Ausführungsvariante relativ gross.

Das Angriffsmittel ist über eine am rückwärtigen Ende des Körpers des Befestigungsmittels mündende axiale Bohrung erreichbar. Dabei kann die Bohrung als Durchgangsbohrung ausgebildet sein. Vorzugsweise ist die axiale Bohrung im Körper jedoch als eine Sacklochbohrung ausgebildet und ist das Angriffsmittel am Grund der Sacklochbohrung angeordnet. Bei dieser Ausführungsvariante ist die Positions des Eingriffs des Setzwerkzeugs mit dem Angriffsmittel eindeutig festgelegt, und es ist eine optimale Drehmomentübertragung in unmittelbarer Nachbarschaft zum Auslauf der Schneide gewährleistet.

Weitere Vorteile und Merkmale ergeben sich aus der nachfolgenden Beschreibung einer beispielsweisen Ausführungsvariante der Erfindung unter Bezugnahme auf die einzige schematische Zeichnung, welche einen Axialschnitt eines als selbstschneidender Dübel ausgebildeten Befestigungselements zeigt.

Das als selbstschneidender Dübel ausgebildete Befestigungselement trägt gesamthaft das Bezugszeichen 1. Der Dübel 1 weist einen im wesentlichen zylindrischen Körper 2 auf, an dessen Umfangsfläche eine wendelartig umlaufende Schneide 7 ausgebildet ist. Der selbstschneidende Dübel 1 ist in Gebrauchsstellung dargestellt, wobei sein Vorderabschnitt 3 in die Setzrichtung S weist. Die Schneide 7 weist am Vorderabschnitt 3 einen Auslauf 71 auf und erstreckt sich entgegen der Setzrichtung S in Richtung des rückwärtigen Endes 1 des Körpers 2. Die Schneide 7 erstreckt sich dabei mit Vorteil über einen wesentlichen Teil der Längserstreckung des Körpers 2 des Dübels. Die Ausbildung der Schneide 7 ist an sich aus dem Stand der Technik bekannt. Der grösste radiale Überstand der wendelartig verlaufenden Schneide 7 beträgt beispielsweise etwa 1,5 mm bis etwa 4 mm. Der radiale Überstand der Schneide 7 nimmt am Auslauf 71 im wesentlichen auf Null ab. Dies erleichtert beim drehenden Setzen des selbstschneidenden Dübels 1 das Eingraben der Schneide 7 in die Wandung einer im harten Untergrund, beispielsweise Beton, Stein, Mauerwerk oder dergleichen, erstellten Aufnahmebohrung.

Der dargestellte selbstschneidende Dübel 1 weist eine Sacklochbohrung 5 auf, die mit einem Innengewinde 6 als Lastangriffsmittel ausgestattet ist. Das Innengewinde läuft an der Mündung der Sacklochbohrung 5 am rückwärtigen Ende 4 des Körpers 2 aus. Am Grund der Sacklochbohrung 5 ist ein Angriffsmittel 8 für ein Setzwerkzeug angeordnet. Bei dem dargestellten Ausführungsbeispiel weist das Angriffsmittel 8 eine polygonale, insbesondere eine sechseckige, Querschnittskontur auf.

Das Lastangriffmittel kann jedoch auch andere polygonale Querschnittkonturen, beispielsweise drei-, vier-, fünfeckige usw. Querschnittkonturen aufweisen. Prinzipiell sind auch alle aus der Schraubtechnik bekannten offenen Querschnittskonturen geeignet. Beispiele dafür sind einfache oder gekreuzte Schlitze, Torx-Konturen, sternförmige Konturen und dergleichen. Bei der Auswahl der Querschnittskontur wird neben der Verfügbarkeit von Setzwerkzeugen in der Regel auch eine möglichst grosse Gesamtfläche zur Drehmomentübertragung angestrebt, die in einen vorgegebenen Durchmesser einschreibbar ist.

Zum Unterschied von den selbstschneidenden Befestigungsmitteln für harte Untergründe des Stands der Technik ist bei dem erfindungsgemässen selbstschneidenden Befestigungsmittel 1 das Angriffsmittel 8 im wesentlichen auf gleicher axialer Höhe angeordnet wie der Auslauf der Schneide 7. Dies hat den grossen Vorteil, dass die Drehmomenteinleitung im wesentlichen in unmittelbarer Nachbarschaft zum Auslauf 71 der Schneide 7 erfolgt. Dadurch ist der Dübel 1 bereits vor Beginn des Setzvorgangs stabilisiert und ein Kippen und Präzesieren um seine Achse wird verhindert. Durch die optimale Drehmomenteinleitung gräbt sich die Schneide 7 bei Beginn des drehenden Setzvorgangs schnell in die Wandung der Aufnahmebohrung ein und stabilisiert den Dübel 1 zusätzlich.

Der Durchmesser d der Sacklochbohrung 5 ist grösser als der Durchmesser bzw. die Weite w des Angriffsmittels 8. Dadurch ist das Setzgerät sehr einfach bis in den Grund der Sacklochbohrung 5 einführbar, um es in Eingriff mit dem Angriffsmittel 8 zur Drehmomentübertragung zu bringen. Der im wesentlichen zylindrisch ausgebildete Körper 2 des selbstschneidenden Dübels 1 ist an seinem Vorderabschnitt 3 verjüngt bzw. gefast ausgebildet. Dies erleichtert das Ansetzen des Dübels 1 an die vorbereitete Aufnahmebohrung.

Das erfindungsgemässe Befestigungselement besteht üblicherweise aus Stahl. Für besondere Anwendungen kann auch ein korrosionsbeständiger Stahl verwendet werden.

Die Herstellung des Dübels erfolgt erfolgt beispielsweise in einem spanabhebenden Verfahren oder vorzugsweise in einem kostengünstigen Kaltumformverfahren.

Die Erfindung ist am Beispiel eines selbstschneidenden Dübels mit einer Innengewindebohrung erläutert worden. Es versteht sich, dass die erfindungsgemässe Anordnung der Angriffsmittel auch bei sogenannten Betonschrauben mit üblicherweise als Sechskant ausgebildetem Kopf vorgesehen sein kann. Das beschriebene Lastangriffsmittel kann als ein Steilgewinde, ein Withworth-Gewinde, ein metrisches Gewinde oder dergleichen ausgebildet sein. Gewinde als Lastangriffsmittel bieten den Vorteil, dass ein am Befestigungsmittel festgelegtes Bauteil sehr einfach durch Lösen der eingeschraubten Befestigungsschraube wieder demontierbar ist. Neben einem Innengewinde kann das Lastangriffmittel auch ein Schnellanbindesystem auf klemmender Formschlussbasis, ein Bajonettanschluss oder dergleichen sein.

Indem bei dem erfindungsgemässen Befestigungselement das Angriffsmittel für ein Setzwerkzeug zur Drehmomentübertragung beim Setzvorgang im wesentlichen auf gleicher Höhe mit dem Auslauf der Schneide angeordnet ist, wird der Kipptendenz des Befestigungselements zuverlässig entgegengewirkt. Im Gegensatz zu den Befestigungselementen des Stands der Technik wird dadurch das Drehmoment in unmittelbarer Nachbarschaft des Eingriffs der Schneide in die Wandung einer vorbereiteten Aufnahmebohrung eingeleitet. Beim Setzvorgang weist das Befestigungselement daher eine sehr stabile Lage auf, eine Präzesion um seine Achse infolge Kippens aus der axialen Ausrichtung wird weitgehend vermieden. Dadurch kommt es auch mit Befestigungselemente mit nur einer umlaufenden Schneide zu keinem Aufweiten der Aufnahmebohrung im Mündungsbereich. Durch das Einleiten des Drehmoments in unmittelbarer Nachbarschaft zum Schneidenauslauf am vorderen Endabschnitt des Körpers des Befestigungselements greift die Schneide optimal in die Wandung der Aufnahmebohrung ein und stabilisiert so das Befestigungselement unmittelbar nach Beginn des Setzvorgangs zusätzlich. Auf Mehrfachschneiden, insbesondere drei Schneiden zur Erzielung einer Dreipunktauflage vor Beginn des Setzvorgangs kann verzichtet werden. Dadurch ist das Befestigungselement relativ einfach und kostengünstig herstellbar.

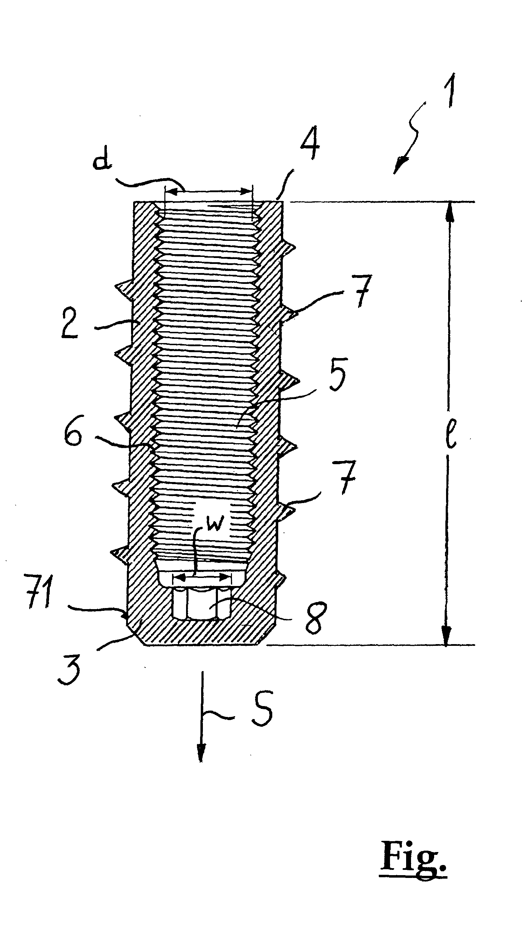

## Patentansprüche

1. Befestigungselement für harte Untergründe, insbesondere für Beton oder dergleichen, mit einem im wesentlichen zylindrischen Körper (2), an dessen Umfangsfläche wenigstens eine wendelförmig umlaufende Schneide (7) vorgesehen ist, die sich von einem setzrichtungsseitigen (S) vorderen Endabschnitt (3) des Körpers (2) in Richtung dessen rückwärtigen Endes (4) erstreckt, und mit einem Angriffsmittel (8) für ein Setzwerkzeug zur Übertragung von Drehmoment beim Setzvorgang, **dadurch gekennzeichnet, dass** das Angriffsmittel (8) im wesentlichen auf gleicher axialer Höhe des Körpers (2) angeordnet ist wie ein Auslauf (71) der Schneide (7) am vorderen Endabschnitt (3) des Körpers (2).

2. Befestigungselement nach Anspruch 1, **dadurch gekennzeichnet, dass** das Angriffsmittel (8) eine polygone, vorzugsweise regelmässig mehreckige, insbesondere sechseckige, Querschnittskontur aufweist.

3. Befestigungselement nach Anspruch 1 oder 2, **dadurch gekennzeichnet, dass** das Angriffsmittel (8) innerhalb des Körpers (2) angeordnet und durch eine am rückwärtigen Ende (4) des Körpers (2) mündende Bohrung (5) erreichbar ist.

4. Befestigungselement nach einem der vorangehenden Ansprüche, **dadurch gekennzeichnet, dass** die Bohrung (5) im Körper (2) einen Durchmesser (d) aufweist, der grösser ist als ein Durchmesser (w) des Angriffsmittels (8).

5. Befestigungselement nach Anspruch 4, **dadurch gekennzeichnet, dass** die Bohrung (5) mit einem Lastangriffsmittel (6) ausgestattet ist, welches vorzugsweise entgegen der Setzrichtung (S) nach rückwärts an das Angriffmittel (8) anschliesst.

6. Befestigungselement nach Anspruch 5, **dadurch gekennzeichnet, dass** das Lastangriffsmittel (6) ein Innengewinde ist.

7. Befestigungselement nach einem der vorangehenden Ansprüche, **dadurch gekennzeichnet, dass** der vordere Endabschnitt (3) des Körpers (2) zum vorderen Ende hin verjüngt ausgebildet ist.

8. Befestigungselement nach einem der vorangehenden Ansprüche, **dadurch gekennzeichnet**, das die wendelförmig umlaufende Schneide (7) über einen wesentlichen Teil der Längserstreckung (1) des Körpers (2) verläuft.

9. Befestigungselement nach Anspruch 2 und 3, **dadurch gekennzeichnet, dass** die sich vom rückwärtigen Ende (3) des Körpers (2) zum Angriffsmittel (8) erstreckende Bohrung (5) im wesentlichen über ihre gesamte Längserstreckung (1) einen Querschnitt aufweist, der demjenigen des Angriffsmittels (8) entspricht.

10. Befestigungselement nach einem der vorangehenden Ansprüche, **dadurch gekennzeichnet, dass** das Angriffsmittel (8) am Grund einer im Körper (2) axial verlaufenden Sacklochbohrung (5) angeordnet ist.
